# EUROPEAN PATENT SPECIFICATION

(11) **EP 4 498 663 B1**
(45) Date of publication and mention of the grant of the patent: **06.05.2026**
(21) Application number: 23825956.8
(22) Date of filing: 27.04.2023
(51) Int. Cl.: H04M 1/03, H04R 1/04

(54) **AUDIO DEVICE AND TERMINAL DEVICE**
AUDIOVORRICHTUNG UND ENDGERÄTEVORRICHTUNG
DISPOSITIF AUDIO ET DISPOSITIF TERMINAL

(30) Priority: 24.06.2022 CN 202210731107
(43) Date of publication of application: 29.01.2025
(73) Proprietor: Honor Device Co., Ltd., Shenzhen, Guangdong 518040 (CN)
(72) Inventor: MAO, Chuncheng, Shenzhen, Guangdong 518040 (CN); LIU, Jinkun, Shenzhen, Guangdong 518040 (CN); CUI, Jiaxuan, Shenzhen, Guangdong 518040 (CN); MA, Dong, Shenzhen, Guangdong 518040 (CN)
(74) Representative: Isarpatent
(86) International application number: PCT/CN2023/091232
(87) International publication number: WO 2023/246303

(56) References cited:
- EP-A1- 1 780 989
- CN-A- 107 465 776
- CN-A- 110 535 990
- CN-A- 111 108 756
- CN-B- 108 429 829
- CN-U- 210 469 408
- CN-U- 217 508 805

## Description

Priority is claimed to Chinese Patent Application No. 202210731107.8, filed with the China National Intellectual Property Administration on June 24, 2022 and entitled "AUDIO DEVICE AND TERMINAL DEVICE".

### TECHNICAL FIELD

This disclosure generally relates to the field of electronic technologies, and the invention in particular relates to a terminal device.

### BACKGROUND

Currently, to meet a calling need of users, mobile phones generally have an audio device such as a microphone (MIC) arranged therein. Further, to improve a noise reduction effect, some mobile phones are provided with the microphone not only on a bottom or a top, but also on a back. The microphone arranged on the back of the mobile phones may be referred to as a back MIC.

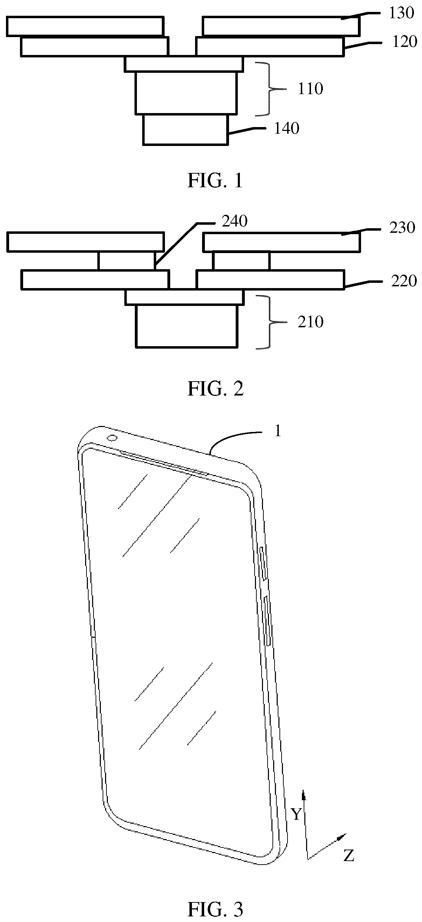

When the back MIC needs to be arranged in a mobile phone and a circuit board in the mobile phone is a flexible circuit board, the back MIC is usually mounted in the mobile phone in a manner shown in FIG. 1. Referring to FIG. 1, a microphone 110 is usually arranged on a flexible circuit board 120. The flexible circuit board is bonded to a support 130 of a mobile phone. In addition, to reduce a risk that the microphone 110 falls off the support 130, a supporting member 140 configured to support the microphone 110 is usually arranged below the microphone 110.

However, in this solution, an additional space needs to be reserved in the mobile phone for the supporting member.

CN 108 429 829 A discloses an electronic component and an electronic device. The electronic component comprises an optical sensor and a transmitter, wherein the transmitter comprises a bottom end and a top end opposite to the bottom end, a reception part is arranged at the top end, the optical sensor is fixed on the end face of the top end, and the optical sensor is provided with a tone leading channel right opposite to the reception part. Through fixing the optical sensor on the end face of the top end of the transmitter, and arranging the tone leading channel corresponding to the reception part of the top end, sound is conducted to the transmitter via the tone leading channel, the condition that the transmitter receives sound normally is ensured, and thus the arrangement area of the electronic component is reduced.

### SUMMARY

As described above, in the prior art, to prevent a microphone from falling off a support, a supporting member configured to support the microphone needs to be arranged. Therefore, in a terminal device, a space needs to be reserved for the supporting member. The object of the present invention is to provide a terminal device which can resolve this technical problem. This object is solved in particular by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

In a first aspect according to the invention, the invention provides a terminal device, including:
a microphone, a flexible circuit board, and a support.

The microphone is located between the support and the flexible circuit board.

A contact region between the flexible circuit board and the microphone includes a first hole for an airflow of audio to circulate.

In the terminal device according to the invention, the microphone is located between the support and the flexible circuit board, and the support can provide a supporting function. Therefore, through the audio device, a risk that the microphone falls off the support can be reduced even if no supporting member is arranged.

According to the invention, the terminal device further includes:
a first reinforcing member.

The first reinforcing member is located between the support and the flexible circuit board, and is located around the microphone and is connected thereto.

In a possible implementation, a first side of the first reinforcing member is welded to the support, or the first side of the first reinforcing member is bonded to the support through a back adhesive.

A second side of the first reinforcing member is welded to the flexible circuit board, or the second side of the first reinforcing member is bonded to the flexible circuit board through the back adhesive, and the first side of the first reinforcing member is opposite to the second side of the first reinforcing member.

In a possible implementation, the first reinforcing member includes a metal member or a composite fiber member.

Through the first reinforcing member, strength of the terminal can be improved.

According to the invention, the terminal device further includes:
a seal member.

According to the invention, a space between the flexible circuit board and a structural member of the terminal device is sealed by the seal member.

The seal member includes a second hole for the airflow of the audio to circulate.

In a possible implementation, the seal member includes foam and/or a back adhesive.

Through the seal member, sealing of the flexible circuit board and the structural member can be achieved.

According to the invention, the terminal device further includes:
a second reinforcing member.

The second reinforcing member is located between the flexible circuit board and the seal member and is connected thereto.

The second reinforcing member may include a third hole for the airflow of the audio to circulate.

Through the second reinforcing member, the strength of the audio device can be improved.

In a possible implementation, a first side of the second reinforcing member is welded to the flexible circuit board, or the first side of the second reinforcing member is bonded to the flexible circuit board through the back adhesive.

A second side of the second reinforcing member is welded to the seal member, or the second side of the second reinforcing member is bonded to the seal member through the back adhesive, and the first side of the second reinforcing member is opposite to the second side of the second reinforcing member.

In a possible implementation, a first surface of the flexible circuit board covers a surface of the second side of the first reinforcing member.

The first surface of the flexible circuit board is a surface of the flexible circuit board connected to the first reinforcing member.

In a possible implementation, a second surface of the flexible circuit board covers a surface of the first side of the second reinforcing member.

The second surface of the flexible circuit board is a surface of the flexible circuit board connected to the first reinforcing member.

In a possible implementation, the support includes a groove.

The microphone is located in the groove.

In a possible implementation, a depth of the groove is in a range of 0.5 mm to 1.5 mm.

A distance between a bottom of the microphone and the groove is in a range of 0.05 mm to 0.25 mm.

In a possible implementation, the structural member includes a cover or a housing of the terminal device.

In a second aspect, wherein the second aspect and any of its implementations and options below are not claimed, this disclosure also describes another terminal device.
an audio device.

In a possible implementation, a screen of the terminal device is a flexible screen.

In the audio device, the microphone is located between the support and the flexible circuit board, and the support can provide a supporting function. Therefore, through the audio device, a risk that the microphone falls off the support can be reduced even if no supporting member is arranged, thereby resolving a problem in the prior art that a space needs to be reserved in a terminal device for a supporting member due to a need to arrange the supporting member.

Further, according to the invention, because no space needs to be reserved in the terminal device for the supporting member, the terminal device can be lighter and thinner.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic structural diagram of an audio device;
FIG. 2 is a schematic structural diagram of another audio device;
FIG. 3 is a schematic structural diagram of a terminal device according to an embodiment of this application;
FIG. 4 is a partial schematic structural exploded view of the terminal device according to an embodiment of this application;
FIG. 5 is a schematic structural diagram of an audio device according to an embodiment of this application;
FIG. 6 is a schematic structural diagram of another audio device according to an embodiment of this application; and
FIG. 7 is a schematic structural diagram of another audio device according to an embodiment of this application.

### DESCRIPTION OF EMBODIMENTS

Technical solutions in embodiments of this application are described below with reference to drawings in embodiments of this application.

Terms used in the following embodiments are merely intended to describe particular embodiments, and are not intended to limit this application. As used in the specification and the claims of this application, a singular expression "one", "a/an", "the", "foregoing", "the", or "this" is intended to include an expression "one or more", unless clearly indicated to the contrary in the context. It should be further understood that, in the following embodiments of this application, "at least one" and "one or more" mean one, two, or more than two. A term "and/or" is used to describe an association relationship between associated objects and represents that three relationships may exist. For example, A and/or B may represent: only A exists, both A and B exist, and only B exists. A and B may be singular or plural. A character "/" generally indicates that the associated objects are in an "or" relationship.

Reference to "one embodiment" or "some embodiments" described in this specification means that a specific characteristic, structure, or feature described in combination with the embodiment is included in one or more embodiments of this application. Therefore, statements "in an embodiment", "in some embodiments", "in some other embodiments", "in some additional embodiments", and the like throughout this specification do not necessarily refer to the same embodiment, but mean "one or more but not all embodiments", unless otherwise specially emphasized in another manner. Terms "comprise", "include", "have", and variations thereof all mean "including but not limited to", unless otherwise specially emphasized in another manner.

For a clear and concise description of the following embodiments, a brief introduction the prior art is provided first.

Currently, to meet user demands, some terminal devices are provided with an audio device, that is, a microphone (MIC). The microphone is arranged on a back of some terminal devices. In other words, a sound outlet of the microphone is located on the back of the terminal devices.

For example, some high-end mobile phones are provided with three MICs. A MIC with a sound outlet located on a bottom of a mobile phone is usually referred to as a main MIC, a MIC with a sound outlet located on a top of the mobile phone may be referred to as a secondary MIC, and a MIC with a sound outlet located on a back of the mobile phone may be referred to as a third MIC or a back MIC. Arranging three MICs can improve a noise reduction effect of a mobile phone, and improve sound quality of the mobile phone.

In addition, if a MIC is arranged on a back of a terminal device, a stack design of the MIC may adopt a hard board solution or a flexible board solution based on a material of a circuit board on which the MIC is to be welded. The hard board solution refers to welding a MIC to a hard circuit board. A structural diagram of the solution may be shown in FIG. 2. Referring to FIG. 2, in the hard board solution, a MIC 210 is welded to a hard circuit board 220, a hole is provided on the hard circuit board 220, and a space between the hard circuit board and an exterior structural member 230 of a terminal device is sealed by a seal member 240.

The flexible board solution refers arranging a MIC on a flexible circuit board. A structural diagram of the solution may be shown in FIG. 1. In the solution, the MIC is arranged on the flexible circuit board. During assembly of a whole machine, the flexible circuit board provided with the MIC is usually bonded to a lower surface of a support of a terminal device, to mount the flexible circuit board provided with the MIC to the whole machine together with the support.

Further, the flexible board solution has a risk that the MIC falls off the support. For example, because the flexible circuit board has a characteristic of being bendable, the MIC may fall off the support after a plurality of times of bending. Alternatively, adhesion of a back adhesive bonding the flexible circuit board to the support decreases with time of use, which may cause the MIC and the flexible circuit board to fall off the support.

To reduce the risk of falling off of the MIC, referring to FIG. 1, currently, a supporting member configured to support the MIC is usually arranged below the MIC. However, to arrange the supporting member below the MIC, a space needs to be reserved in the terminal device for the supporting member.

In view of the problem in the existing flexible board solution that a supporting member needs to be arranged to reduce a risk of falling off of a MIC and therefore a space needs to be reserved in a terminal device for the supporting member to arrange, this application provides an audio device and a terminal device including the audio device. Through the audio device, the risk of falling off of a MIC can be reduced without a need to arrange a supporting member.

A terminal device 1 in embodiments of this application may be referred to as user equipment (UE), a terminal, a terminal device, or the like. For example, the terminal device 1 may be a mobile terminal or a fixed terminal having a display, such as a tablet computer (portable android device, PAD), a personal digital assistant (PDA), a notebook computer, a handheld device having a wireless communication function, a computing device, an on-board device, a wearable device, a virtual reality (VR) terminal device, an augmented reality (AR) terminal device, a wireless terminal in industrial control, a wireless terminal in self driving, a wireless terminal in remote medical, a wireless terminal in a smart grid, a wireless terminal in transportation safety, a wireless terminal in smart city, or a wireless terminal in smart home. A form of the terminal device is not specifically limited in embodiments of this application.

FIG. 3 schematically shows a structure of the terminal device 1 according to an embodiment. As shown in FIG. 3, in this embodiment of this application, a description is provided by using an example in which a terminal device 3 is a handheld device having a wireless communication function. The handheld device may be a mobile phone or the like. In addition, in FIG. 3, a short side of the mobile phone is an x axis of a coordinate system, and a side on which a height of the mobile phone is located is a y axis of the coordinate system.

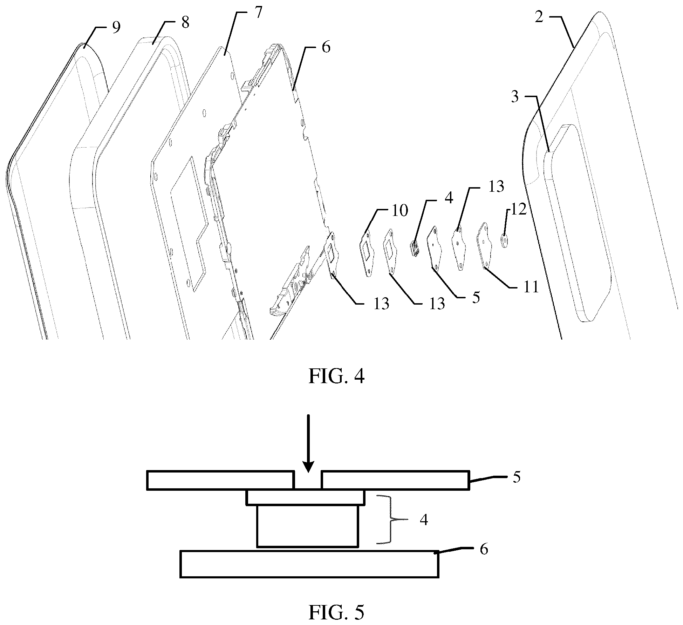

FIG. 4 schematically shows a partial exploded structure of the terminal device according to an embodiment. As shown in FIG. 3 and FIG. 4, the terminal device 1 in this embodiment of this application includes a structural member 2, a decorative member 3, a microphone 4, a flexible circuit board 5, a support 6, a main board 7, a middle frame 8, and a screen assembly 9. In addition, the terminal device may further include a battery assembly and various types of electronic elements. In addition, in a coordinate system shown in FIG. 4, the short side of the terminal device 1 is an x axis of the coordinate system, the side on which the height of the terminal device 1 is located is a y axis of the coordinate system, and a long side of the terminal device 1 is a z axis of the coordinate system.

The screen assembly 9 is mounted to the middle frame 8, and a display region of the screen assembly 9 is exposed to present image information to a user. The main board 7 and the battery assembly are arranged in the terminal device 1, and are located on inner sides of structural member 2 and the screen assembly 9, so that a user cannot easily observe the main board 7 and the battery assembly from outside of the terminal device 1. The electronic element is arranged on the main board 7. The electronic element includes but is not limited to a processor, an antenna module, a Bluetooth module, a wireless communication module, a global positioning system (GPS) module, a power supply and a charging module, a screen display and an operating module, a distance sensor, a light sensor, an earphone jack, and a universal serial bus (USB) interface.

In addition, in a feasible design, the structural member 2 may be a cover or a housing of the terminal device 1. For example, if the terminal device 1 is a mobile phone, the structural member 2 may be a battery cover of the mobile phone.

Because an internal space of the terminal device 1 is relatively small, the electronic elements are highly integrated on the main board 7 to minimize a volume of the main board 7 and reduce a space occupation of the main board 7. Optionally, to meet a design requirement on the internal space of the terminal device 1, the main board 7 may have separate pieces. Different electronic elements are arranged on the main board 7 having separate pieces, to realize corresponding functions.

The battery assembly is configured to supply electrical energy to the terminal device 1, to ensure normal operation of the terminal device 1. For example, the battery assembly may supply electrical energy to the screen assembly 9, so that the screen assembly 9 can display image information or complete corresponding operation instructions. Alternatively, the battery assembly may supply electrical energy to the main board 7, to ensure normal operation of the electronic elements on the main board 7.

The battery assembly includes a battery and a battery protection circuit board. The battery may be a lithium ion battery, such as a lithium iron phosphate battery. The battery is a structural member that can convert chemical energy to electrical energy. The battery includes a positive tab and a negative tab having opposite polarities.

In a height direction Y of the structural member, the battery protection circuit board is arranged on a side of the battery. The battery protection circuit board is a plate-like structure having a predetermined thickness. The battery protection circuit board is configured to detect an operating status of the battery, to reduce a possibility of overcharging, over-discharging, a short circuit, or ultra-high temperature charging/discharging of the battery, thereby protecting the battery. The battery protection circuit board includes a protection circuit. The positive tab and the negative tab of the battery may be respectively welded with the protection circuit, to realize electrical connection between the battery and the battery protection circuit board.

Because the terminal device 1 is a frequently-used product in daily life, users have an increasing demand for lightening and thinning or miniaturization of the terminal device 1. The lightened and thinned or miniaturized terminal device 1 can effectively reduce fatigue during use of the terminal device 1 and difficulty in carrying the electronic device for users. In addition, users have an increasing demand for functions of the terminal device 1. For example, the terminal device 1 may include a functional device for photographing, light sensing, illumination, or the like, so that the terminal device 1 can realize various functions. For example, the functional device is a camera module for photographing. To obtain more desirable imaging quality, the camera module needs to be designed with a relatively large size to arrange an optical lens set or an optical sensor with more desirable performance. However, a camera module with a relatively large size limits a thickness of the terminal device 1. To realize lightening and thinning or miniaturization of the terminal device 1 and obtain desirable image quality, the decorative member 3 needs to be arranged on the structural member of the terminal device 1 to shield or mask the functional device. Therefore, not only a corresponding function is realized by using the functional device, but also a pleasing appearance of the terminal device 1 is realized. Moreover, a thickness of a part other than the functional device may be designed to be smaller, thereby realizing lightening and thinning or miniaturization of the terminal device 1. The decorative member 3 is arranged on the structural member and may be connected to the structural member. Because a part of the decorative member 3 is higher than an outer surface of the structural member, an overall thickness of a region on the terminal device 1 where the decorative member is arranged is relatively large. The outer surface of the structural member is a surface facing an external environment. A user may observe or touch the external surface of the structural member when using the terminal device 1.

In addition, referring to FIG. 4, in the terminal device, the microphone 4, the flexible circuit board 5, and the support 6 form the audio device of the terminal device. The microphone 4 is located between the support 6 and the flexible circuit board 5. In addition, a contact region between the flexible circuit board 5 and the microphone 4 includes a first hole for an airflow of audio to circulate.

The microphone 4 is located between the support 6 and the flexible circuit board 5, and the support 6 can provide a supporting function. Therefore, a risk that the microphone 4 falls off the support 6 is reduced. Moreover, through the audio device, no supporting member needs to be arranged, which resolves a problem in the prior art that a space needs to be reserved in the terminal device 1 due to a need to arrange a supporting member. In addition, after the audio device is mounted to the terminal device 1, an airflow of audio may flow into the microphone 4 from outside of the terminal device 1 through the first hole.

Further, the terminal device 1 may further include a first reinforcing member 10, a second reinforcing member 11, a seal member 12, and a back adhesive 13. The first reinforcing member 10 and the second reinforcing member 11 can may be configured to improve strength of the audio device. The first reinforcing member 10 is located between the support 6 and the flexible circuit board 5, and is located around the microphone 4. The second reinforcing member 11 is located between the flexible circuit board 5 and the seal member 12. The seal member 12 is configured to seal the flexible circuit board 5 and the structural member of the terminal device 1. The back adhesive 13 may be configured to bond the first reinforcing member 10 to the support 6 and bond the first reinforcing member 10 to the flexible circuit board 5. In addition, the back adhesive 13 may be further configured to bond the second reinforcing member 11 to the flexible circuit board 5 and bond the second reinforcing member 11 to the seal member 12.

To make the solutions provided in this application clear, the solutions provided in this application are described below through embodiments with reference to the drawings.

An embodiment of this application provides an audio device. Referring to FIG. 5, the audio device includes a microphone 4, a flexible circuit board 5, and a support 6.

The microphone 4 is located between the support 6 and flexible circuit board 5. In a feasible design, the support 6 may be a main board support of the terminal device 1.

In addition, a contact region between the flexible circuit board 5 and the microphone 4 includes a first hole for an airflow of audio to circulate. In addition, after the audio device is mounted to the terminal device 1, the airflow of the audio may flow from the structural member of the terminal device 1 to the microphone 4 through the first hole, so that the microphone 4 receives the airflow of the audio.

In the audio device, the microphone 4 is located between the support 6 and the flexible circuit board 5, and the support 6 can provide a supporting function. Therefore, through the audio device 1, a risk that the microphone 4 falls off the support 6 can be reduced even if no supporting member is arranged, thereby resolving a problem in the prior art that a space needs to be reserved in the terminal device 1 for a supporting member due to a need to arrange the supporting member. In addition, in the solutions of this application, because no space needs to be reserved in the terminal device 1 for the supporting member, the terminal device 1 can be lighter and thinner.

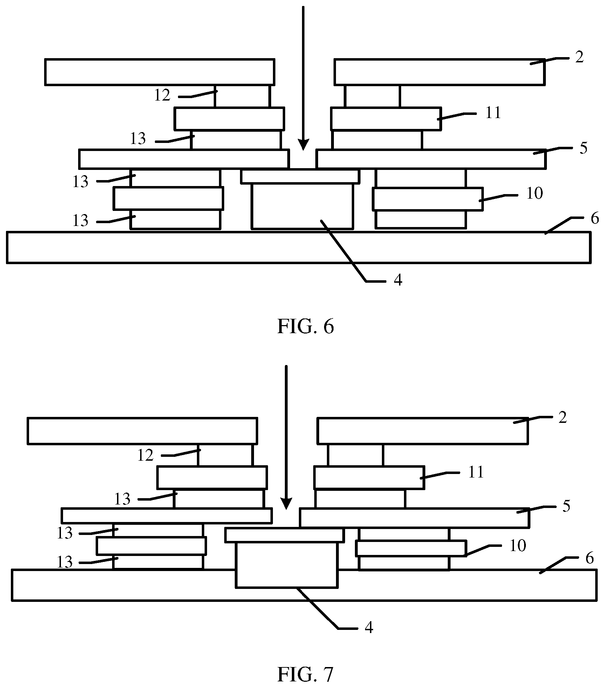

Further, referring to FIG. 6, the audio device provided in this embodiment of this application further includes a first reinforcing member 10. The first reinforcing member 10 is located between the support 6 and the flexible circuit board 5, and is located around the microphone 4. For example, the first reinforcing member 10 may surround the microphone 4.

The first reinforcing member 10 is connected to the support 6 in various manners. For example, in a feasible design, a first side of the first reinforcing member 10 is welded to the support 6. Alternatively, in another feasible design, the first side of the first reinforcing member 10 is bonded to the support 6 through a back adhesive 13. Certainly, the first reinforcing member 10 may be connected to the support 6 in another manner. This is not limited in this embodiment of this application.

In addition, the first reinforcing member 10 is connected to the flexible circuit board 5 in various manners. For example, in a feasible design, a second side of the first reinforcing member 10 is welded to the flexible circuit board 5. Alternatively, in another feasible design, the second side of the first reinforcing member 10 is bonded to the flexible circuit board 5 through the back adhesive 13. The first side of the first reinforcing member 10 is opposite to the second side of the first reinforcing member 10. Certainly, the first reinforcing member 10 may be connected to the flexible circuit board 5 in another manner. This is not limited in this embodiment of this application.

The first reinforcing member 10 may be configured to improve strength of the audio device. The first reinforcing member 10 may include a metal member, such as a steel sheet. Alternatively, the first reinforcing member 10 may include a composite fiber member. Certainly, the first reinforcing member 10 may further include another device that can improve the strength of the audio device. This is not limited in this embodiment of this application.

The audio device provided in this embodiment of this application further includes a seal member 12.

When the audio device is arranged in the terminal device 1, a space between the flexible circuit board 5 and the structural member of the terminal device 1 is sealed by the seal member 12. The structural member may be a cover or a housing of the terminal device 1. For example, if the terminal device 1 is a mobile phone, the structural member may be a battery cover or a mobile phone housing of the mobile phone.

The seal member 12 includes a second hole for the airflow of the audio to circulate. Generally, a centerline of the second hole may be the same as a centerline of the first hole. The second hole and the first hole form an airflow channel, so that the airflow of the audio flows into the microphone 4.

The seal member 12 includes foam and/or a back adhesive. Certainly, the seal member 12 may be made of another material with a sealing function. This is not limited in this embodiment of this application.

Further, the audio device provided in this embodiment of this application further includes a second reinforcing member 11.

The second reinforcing member 11 is located between the flexible circuit board 5 and the seal member 12. The second reinforcing member 11 includes a third hole for the airflow of the audio to circulate.

The first hole, the second hole, and the third hole form an airflow channel. When the audio device is arranged in the terminal device 1, the airflow of the audio may flow from the structural member of the terminal device 1 to the microphone 4 through the airflow channel. In a feasible design, centerlines of the first hole, the second hole, and the third hole are located on a same straight line.

The second reinforcing member 11 is connected to the flexible circuit board 5 in various manners. For example, in a feasible design, a first side of the second reinforcing member 11 is welded to the flexible circuit board 5. Alternatively, in another feasible design, the first side of the second reinforcing member 11 is bonded to the flexible circuit board 5 through the back adhesive 13. Certainly, the second reinforcing member 11 may be connected to the flexible circuit board 5 in another manner. This is not limited in this embodiment of this application.

In addition, the second reinforcing member 11 is connected to the seal member 12 in various manners. For example, in a feasible design, a second side of the second reinforcing member 11 is welded to the seal member 12. Alternatively, in another feasible design, the second side of the second reinforcing member 11 is bonded to the seal member 12 through the back adhesive 13. The first side of the second reinforcing member 11 is opposite to the second side of the second reinforcing member 11. Certainly, the second reinforcing member 11 may be connected to the seal member 12 in another manner. This is not limited in this embodiment of this application.

The second reinforcing member 11 may be configured to improve the strength of the audio device. In addition, the second reinforcing member 11 may include a metal member, such as a steel sheet. Alternatively, the second reinforcing member 11 may include a composite fiber member. Certainly, the second reinforcing member 11 may further include another device that can improve the strength of the audio device. This is not limited in this embodiment of this application.

In a possible design of embodiments of this application, a first surface of the flexible circuit board 5 covers a surface of the second side of the first reinforcing member 10. The first surface of the flexible circuit board 5 is a surface of the flexible circuit board 5 connected to the first reinforcing member 10. The surface of the second side of the first reinforcing member 10 is a surface of the first reinforcing member 10 connected to the flexible circuit board 5.

In this solution, that the first surface of the flexible circuit board 5 covers the surface of the second side of the first reinforcing member 10 means that an area of the surface of the flexible circuit board 5 connected to the first reinforcing member 10 is greater than an area of the surface of the second side of the first reinforcing member 10. The flexible circuit board 5 has a characteristic of being bendable. During use of the terminal device 1, the flexible circuit board 5 may be bent based on a user demand. Because the first surface of the flexible circuit board 5 covers the surface of the second side of the first reinforcing member 10, impact of the first reinforcing member 10 on the bending of the flexible circuit board 5 can be avoided.

In addition, in another possible design of embodiments of this application, a second surface of the flexible circuit board 5 covers a surface of the first side of the second reinforcing member 11. The second surface of the flexible circuit board 5 is a surface of the flexible circuit board 5 connected to the first reinforcing member 10. The surface of the first side of the second reinforcing member 11 is a surface of the second reinforcing member 11 connected to the flexible circuit board 5.

In this solution, that the second surface of the flexible circuit board 5 covers the surface of the first side of the second reinforcing member 11 means that an area of the surface of the flexible circuit board 5 connected to the second reinforcing member 11 is greater than an area of the surface of the first side of the second reinforcing member 11. In this way, impact of the second reinforcing member 11 on the bending of the flexible circuit board 5 can be avoided.

In the audio device provided in this embodiment of this application, the microphone 4 is located between the flexible circuit board 5 and the support 6. In a feasible design, the support 6 has a flat surface. In other words, the support 6 includes no groove.

Alternatively, in another possible design, referring to the schematic structure shown in FIG. 7, the support 6 includes a groove, and the microphone 4 is located in the groove.

The microphone 4 is located in the groove of the support 6. Therefore, a height of the audio device can be reduced, so that a space occupied by the audio device is further reduced, which helps improve lightening and thinning of the terminal device.

A range of a depth of the groove included in the support 6 varies with a type and a volume of the terminal device 1. If the terminal device 1 is a mobile phone, in a possible design, the depth of the groove may be in a range of 0.5 mm to 1.5 mm. In an example, the depth of the groove is 0.5 mm. Alternatively, in another example, the depth of the groove is 1.5 mm.

In addition, if the support 6 includes the groove, a bottom of the microphone 4 may contact the groove, or a gap may exist between the bottom of the microphone 4 and the groove. In this case, if the terminal device 1 is a mobile phone, a distance between the bottom of the microphone 4 and the groove may be in a range of 0.05 mm to 0.25 mm. In an example, the distance between the bottom of the microphone 4 and the groove may be 0.05 mm. Alternatively, in another example, the distance between the bottom of the microphone 4 and the groove may be 0.25 mm.

Another embodiment of this application provides a terminal device. The terminal device includes the audio devices disclosed in the foregoing embodiments.

In the terminal device, the supporting member for supporting the microphone does not need to be arranged for the audio device. Therefore, no space needs to be reserved for the supporting member. The terminal device provided in this embodiment of this application can be thinner and lighter than an existing terminal device.

Further, in the solutions provided in embodiments of this application, the screen of the terminal device may be a flexible screen. The flexible screen may include a single-curve screen, a dual-curve screen, a triple-curve screen, a quad-curve screen, a flat screen, a folding screen, a rollable screen, and the like. This is not limited in embodiments of this application.

For same or similar parts of the embodiments in this specification, reference may be made to each other, and each embodiment focuses on a difference from other embodiments. In particular, because device and system embodiments are similar to method embodiments, they are described simply. For related parts, reference may be made to descriptions of the method embodiments.

The implementations of the present invention described above do not limit the protection scope of the present invention which is defined in the apended claims.

## Claims

1. A terminal device, comprising:
a microphone (110), a flexible circuit board (120), a support (130), a first reinforcing member (10), a second reinforcing member (11), a seal member (12, 240) and a structural member (230), wherein
the microphone (110) is located between the support (130) and the flexible circuit board (120);
a contact region of the flexible circuit board (120) with the microphone (110) comprises a first hole for an airflow of audio to circulate;
the first reinforcing member (10) is located between the support (130) and the flexible circuit board (120) and is connected to the support (130) and the flexible circuit board (120);
the first reinforcing member (10) is located around the microphone (110);
the second reinforcing member (11) is located between the flexible circuit board (120) and the seal member (12, 240) and is connected to the flexible circuit board (120) and the seal member (12, 240);
a space between the flexible circuit board (120) and a structural member (230) of the terminal device is sealed by the seal member (12, 240).

2. The terminal device according to claim **1,** wherein
the support (130) comprises a groove; and
the microphone (110) is located in the groove.

3. The terminal device according to claim 1, wherein
a first side of the first reinforcing member (10) is welded to the support (130), or the first side of the first reinforcing member (10) is bonded to the support (130) through a back adhesive (13).

4. The terminal device according to claim 3, wherein
a second side of the first reinforcing member (10) is welded to the flexible circuit board (120), or the second side of the first reinforcing member (10) is bonded to the flexible circuit board (120) through the back adhesive (13).

5. The terminal device according to claim 4, wherein the first side of the first reinforcing member (10) is opposite to the second side of the first reinforcing member (10).

6. The terminal device according to any one of claims 1 to 5, wherein
the first reinforcing member (10) comprises a metal member or a composite fiber member.

7. The terminal device according to any one of claims 1 to 6, wherein
the seal member (12, 240) comprises a second hole for the airflow of the audio to circulate.

8. The terminal device according to any one of claims 1 to 7, wherein
the seal member (12, 240) comprises foam and/or a back adhesive (13).

9. The terminal device according to claim 7, wherein the second reinforcing member (11) comprises a third hole for the airflow of the audio to circulate.

10. The terminal device according to claim 9, wherein
a first side of the second reinforcing member (11) is welded to the flexible circuit board (120), or the first side of the second reinforcing member (11) is bonded to the flexible circuit board (120) through the back adhesive (13); and
a second side of the second reinforcing member (11) is welded to the seal member (12, 240), or the second side of the second reinforcing member (11) is bonded to the seal member (12, 240) through the back adhesive (13), and the first side of the second reinforcing member (11) is opposite to the second side of the second reinforcing member (11).

11. The terminal device according to claim 5, wherein
a first surface of the flexible circuit board (120) covers a surface of the second side of the first reinforcing member (10); and
the first surface of the flexible circuit board (120) is a surface of the flexible circuit board (120) connected to the first reinforcing member (10).

12. The terminal device according to claim 10, wherein
a second surface of the flexible circuit board (120) covers a surface of the first side of the second reinforcing member (11); and
the second surface of the flexible circuit board (120) is a surface of the flexible circuit board (120) connected to the first reinforcing member (10).

13. The terminal device according to claim 2, wherein
a depth of the groove is in a range of 0.5 mm to 1.5 mm; and
a distance between a bottom of the microphone (110) and the groove is in a range of 0.05 mm to 0.25 mm.

14. The terminal device according to any one of claims 1 to 13, wherein
the structural member (230) comprises a cover or a housing.

## Patentansprüche

1. Eine Endgerätvorrichtung, umfassend:
ein Mikrofon (110), eine flexible Leiterplatte (120), eine Halterung (130), ein erstes Verstärkungselement (10), ein zweites Verstärkungselement (11), ein Dichtungselement (12, 240) und ein Strukturelement (230), wobei
das Mikrofon (110) zwischen der Halterung (130) und der flexiblen Leiterplatte (120) angeordnet ist;
ein Kontaktbereich der flexiblen Leiterplatte (120) mit dem Mikrofon (110) umfasst ein erstes Loch, durch das der Luftstrom des Audios zirkulieren kann;
das erste Verstärkungselement (10) befindet sich zwischen der Halterung (130) und der flexiblen Leiterplatte (120) und ist mit der Halterung (130) und der flexiblen Leiterplatte (120) verbunden; das erste Verstärkungselement (10) ist um das Mikrofon (110) angeordnet;
das zweite Verstärkungselement (11) ist zwischen der flexiblen Leiterplatte (120) und dem Dichtungselement (12, 240) angeordnet und ist mit der flexiblen Leiterplatte (120) und dem Dichtungselement (12, 240) verbunden;
ein Zwischenraum zwischen der flexiblen Leiterplatte (120) und einem Strukturelement (230) der Endgerätvorrichtung wird durch das Dichtungselement (12, 240) abgedichtet.

2. Die Endgerätvorrichtung nach Anspruch 1, wobei
die Halterung (130) eine Nut aufweist; und
das Mikrofon (110) sich in der Nut befindet.

3. Die Endgerätvorrichtung nach Anspruch 1, wobei
eine erste Seite des ersten Verstärkungselements (10) mit der Halterung (130) verschweißt ist oder die erste Seite des ersten Verstärkungselements (10) mithilfe eines Rückenhaftklebers (13) mit der Halterung (130) verbunden ist.

4. Die Endgerätvorrichtung nach Anspruch 3, wobei
eine zweite Seite des ersten Verstärkungselements (10) mit der flexiblen Leiterplatte (120) verschweißt ist oder die zweite Seite des ersten Verstärkungselements (10) mithilfe des Rückenhaftklebers (13) mit der flexiblen Leiterplatte (120) verbunden ist.

5. Die Endgerätvorrichtung nach Anspruch 4, wobei die erste Seite des ersten Verstärkungselements (10) gegenüber der zweiten Seite des ersten Verstärkungselements (10) angeordnet ist.

6. Die Endgerätvorrichtung nach einem der Ansprüche 1 bis 5, wobei
das erste Verstärkungselement (10) ein Metallelement oder ein Verbundfaserelement umfasst.

7. Die Endgerätvorrichtung nach einem der Ansprüche 1 bis 6, wobei
das Dichtungselement (12, 240) ein zweites Loch aufweist, durch das der Luftstrom des Audios zirkulieren kann.

8. Die Endgerätvorrichtung nach einem der Ansprüche 1 bis 7, wobei
das Dichtungselement (12, 240) Schaumstoff und/oder einen Rückenhaftkleber (13) umfasst.

9. Vorrichtung gemäß Anspruch 7, wobei das zweite Verstärkungselement (11) ein drittes Loch aufweist, durch das die Luftströmung des Audios zirkuliert.

10. Vorrichtung gemäß Anspruch 9, wobei
eine erste Seite des zweiten Verstärkungselements (11) an die flexible Leiterplatte (120) geschweißt ist, oder die erste Seite des zweiten Verstärkungselements (11) ist durch das rückseitige Klebeband (13) an die flexible Leiterplatte (120) geklebt; und
eine zweite Seite des zweiten Verstärkungselements (11) an das Dichtungselement (12, 240) geschweißt ist, oder die zweite Seite des zweiten Verstärkungselements (11) ist durch das rückseitige Klebeband (13) an das Dichtungselement (12, 240) geklebt, wobei die erste Seite des zweiten Verstärkungselements (11) der zweiten Seite gegenüberliegt.

11. Vorrichtung gemäß Anspruch 5, wobei
eine erste Oberfläche der flexiblen Leiterplatte (120) eine Oberfläche der zweiten Seite des ersten Verstärkungselements (10) bedeckt; und
die erste Oberfläche der flexiblen Leiterplatte (120) ist eine Oberfläche der flexiblen Leiterplatte (120), die mit dem ersten Verstärkungselement (10) verbunden ist.

12. Vorrichtung gemäß Anspruch 10, wobei
eine zweite Oberfläche der flexiblen Leiterplatte (120) eine Oberfläche der ersten Seite des zweiten Verstärkungselements (11) bedeckt; und
die zweite Oberfläche der flexiblen Leiterplatte (120) ist eine Oberfläche der flexiblen Leiterplatte (120), die mit dem ersten Verstärkungselement (10) verbunden ist.

13. Vorrichtung gemäß Anspruch 2, wobei
die Tiefe der Nut im Bereich von 0,5 mm bis 1,5 mm liegt; und
der Abstand zwischen dem Boden des Mikrofons (110) und der Nut im Bereich von 0,05 mm bis 0,25 mm liegt.

14. Vorrichtung gemäß einem der Ansprüche 1 bis 13, wobei
das Strukturelement (230) eine Abdeckung oder ein Gehäuse umfasst.

## Revendications

1. Un dispositif terminal, comprenant :
un microphone (110), une carte de circuit imprimé flexible (120), un support (130), un premier élément de renforcement (10), un second élément de renforcement (11), un élément d'étanchéité (12, 240) et un élément structurel (230), dans lequel
le microphone (110) est situé entre le support (130) et la carte de circuit imprimé flexible (120) ;
une zone de contact de la carte de circuit imprimé flexible (120) avec le microphone (110) comprend un premier orifice permettant à un flux d'air audio de circuler ;
le premier élément de renforcement (10) est situé entre le support (130) et la carte de circuit imprimé flexible (120) et est relié au support (130) et à la carte de circuit imprimé flexible (120); le premier élément de renforcement (10) est situé autour du microphone (110) ;
le second élément de renforcement (11) est situé entre la carte de circuit imprimé flexible (120) et l'élément d'étanchéité (12, 240) et est relié à la carte de circuit imprimé flexible (120) et à l'élément d'étanchéité (12, 240) ;
un espace entre la carte de circuit imprimé flexible (120) et un élément structurel (230) du dispositif terminal est scellé par l'élément d'étanchéité (12, 240).

2. Le dispositif terminal selon la revendication 1, dans lequel
le support (130) comprend une rainure ; et
le microphone (110) est situé dans la rainure.

3. Le dispositif terminal selon la revendication 1, dans lequel
un premier côté du premier élément de renforcement (10) est soudé au support (130), ou le premier côté du premier élément de renforcement (10) est fixé au support (130) à l'aide d'un adhésif arrière (13).

4. Le dispositif terminal selon la revendication 3, dans lequel
un second côté du premier élément de renforcement (10) est soudé à la carte de circuit imprimé flexible (120), ou le second côté du premier élément de renforcement (10) est fixé à la carte de circuit imprimé flexible (120) à l'aide de l'adhésif arrière (13).

5. Le dispositif terminal selon la revendication 4, dans lequel le premier côté du premier élément de renforcement (10) est opposé au second côté du premier élément de renforcement (10).

6. Le dispositif terminal selon l'une quelconque des revendications 1 à 5, dans lequel
le premier élément de renforcement (10) comprend un élément métallique ou un élément en fibre composite.

7. Le dispositif terminal selon l'une quelconque des revendications 1 à 6, dans lequel
l'élément d'étanchéité (12, 240) comprend un second orifice pour permettre à l'air audio de circuler.

8. Le dispositif terminal selon l'une quelconque des revendications 1 à 7, dans lequel
l'élément d'étanchéité (12, 240) comprend une mousse et/ou un adhésif arrière (13).

9. Le dispositif terminal selon la revendication 7, dans lequel le second élément de renforcement (11) comprend un troisième trou permettant la circulation du flux d'air du son.

10. Le dispositif terminal selon la revendication 9, dans lequel
un premier côté du second élément de renforcement (11) est soudé à la carte de circuit flexible (120), ou le premier côté du second élément de renforcement (11) est collé à la carte de circuit flexible (120) par l'intermédiaire de l'adhésif arrière (13) ; et
un second côté du second élément de renforcement (11) est soudé à l'élément d'étanchéité (12, 240), ou le second côté du second élément de renforcement (11) est collé à l'élément d'étanchéité (12, 240) par l'intermédiaire de l'adhésif arrière (13), et le premier côté du second élément de renforcement (11) est opposé au second côté du second élément de renforcement (11).

11. Le dispositif terminal selon la revendication 5, dans lequel
une première surface de la carte de circuit flexible (120) recouvre une surface du deuxième côté du premier élément de renforcement (10) ; et
la première surface de la carte de circuit flexible (120) est une surface de la carte de circuit flexible (120) reliée au premier élément de renforcement (10).

12. Le dispositif terminal selon la revendication 10, dans lequel
une seconde surface de la carte de circuit flexible (120) recouvre une surface du premier côté du second élément de renforcement (11) ; et
la seconde surface de la carte de circuit flexible (120) est une surface de la carte de circuit flexible (120) reliée au premier élément de renforcement (10).

13. Le dispositif terminal selon la revendication 2, dans lequel
la profondeur de la rainure est comprise entre 0,5 mm et 1,5 mm ; et
la distance entre le fond du microphone (110) et la rainure est comprise entre 0,05 mm et 0,25 mm.

14. Le dispositif terminal selon l'une quelconque des revendications 1 à 13, dans lequel
l'élément structurel (230) comprend un couvercle ou un boîtier.
